# EUROPEAN PATENT APPLICATION

(11) **EP 2 544 099 A1**
(43) Date of publication of application: **09.01.2013**
(21) Application number: 12175443.6
(22) Date of filing: 06.07.2012
(51) Int. Cl.: G06F 17/21, G06F 17/22, G06F 17/30

(54) **Method for creating an enrichment file associated with a page of an electronic document**

(30) Priority: 07.07.2011 FR 1156155; 07.07.2011 US 201161505430 P
(71) Applicant: Aquafadas, 34960 Montpellier (FR)
(72) Inventor: Kopp, Matthieu, 34160 Sussargues (FR); Mounier, Nicolas, 34170 Castelnau Le Lez (FR); Allemand, Corentin, 34070 Montpellier (FR); Ribreau, Thomas, 34380 St Martin de Londres (FR)
(74) Representative: Brochard, Pascale

(57) **Abstract**

A method for creating an enrichment file associated with a page of an electronic document formed by a plurality of thematic entities and having a content comprising text distributed in the form of one or more paragraphs, the method comprising determining text content areas, each comprising at least one paragraph, by means of a layout analysis, associating each content area with one of the thematic entities, and storing metadata identifying the geometric coordinates of the text content areas of the page and the thematic entities associated with said content areas of the page.

## Description

### TECHNICAL FIELD

The present invention relates to the field of processing electronic documents, and more precisely fixed layout electronic documents. More specifically, the invention relates to a method for creating an enrichment file, associated with a page of an electronic document, which, notably, enables the presentation of the document page on a display unit to be improved.

### BACKGROUND

The presentation of an electronic document on a display unit is limited by a number of parameters. Notably, if the document is made up of pages, the geometry of the viewport of the display unit and the zoom level desired by the user may restrict the display of a page of the document to the display of a portion of the document page.

In order to overcome this problem, the patent US-B1-7272258 describes a method of processing a page of an electronic document comprising the analysis of the layout of the document page and the reformatting of the page as a function of the geometry of the display unit. This reformatting comprises, notably, the removal of the spaces between text areas and the readjustment of the text to optimize the space of the viewport used. This method has the drawback of not retaining the original form of the document, resulting in a loss of information.

The patent EP 1 343 095 describes a method for converting a document originating in a page-image format into a form suitable for an arbitrarily sized display by reformatting of the document to fit an arbitrarily sized display device.

Another conventional method for displaying the whole of the page is that of moving the viewport manually relative to the document page in a number of directions according to the direction of reading determined by the user. This method has the drawback of forcing the user to move the viewport in different directions and/or to modify the zoom level in a repetitive manner in order to read the whole of the page.

The present invention proposes a method for creating an enrichment file associated with a page of an electronic document, this method providing a tool for improving the presentation of the page based on the thematic entities of the page, notably when the display is restricted by the geometry of the viewport and/or by the user zoom level, while preserving the original format of the page and simplifying the operations for the user.

### SUMMARY OF THE INVENTION

For this purpose, the invention proposes, in a first aspect, a method for creating an enrichment file associated with at least one page of an electronic document formed by a plurality of thematic entities and comprising text distributed in the form of one or more paragraphs. The method comprises determining text content areas, each comprising at least one paragraph, by an analysis of the layout, associating each content area with one of the thematic entities and storing metadata identifying the geometric coordinates of the text content areas of the page and the thematic entities associated with said content areas of the page. The enrichment file is a tool which facilitates the display of the electronic document on a display unit. The enrichment file is intended to be used by the display unit for the purpose of displaying the electronic document and improving the ease of reading for the user. The enrichment file may be used for the purpose of selectively displaying the content areas belonging to a single thematic entity. The enrichment file stores data relating to the structure of the content presented on the page(s) of the electronic document. This makes it possible to display the electronic document while taking into account, notably, the distribution of the text on the page. For example, an enrichment file of this type can enable whole paragraphs to be displayed by adjusting the zoom level, even when the display of the page is constrained by the dimensions of the viewport. Furthermore, an enrichment file of this type associated with an electronic document can simplify the computation to be performed for the display of the document. Thus, if the enrichment file is created in a processing unit which is separate from the display unit, the computation requirements for the display unit are reduced.

In one embodiment, the content presented further comprises one or more images, and the method further comprises determining image content areas each including at least one image, and storing metadata identifying the geometric coordinates of the image content areas of the page. By storing data relating to the images it is possible to provide a display in which the importance of the images and the text can be weighted. More specifically, this arrangement can enable a zoom level to be adjusted in order to display a complete image, or can enable the display of the images to be eliminated completely.

In one embodiment, the text presented on the page is identified in the electronic document in the form of lines of text, and the layout analysis comprises extracting rectangles, each rectangle incorporating one line of text, and merging said rectangles by means of an expansion algorithm in order to obtain the text content areas. This makes it possible to isolate text content areas each of which incorporates one or more paragraphs.

In one embodiment, the text is further identified in the document by style data, and the layout analysis comprises determining a style distribution for each text content area. The recovery of the style data makes it possible to differentiate the text content areas in order to reconstruct the page structure, and, notably, to control the display as a function of the structure of the specified page.

In one embodiment, the layout analysis further comprises identifying title content areas among the text content areas on the basis of the style distribution of the text content areas. By distinguishing a title content area it is possible to ascertain the page structure more precisely.

In one embodiment, the document belongs to a category of a given list of categories, and the method further comprises identifying the category of the document, the association of a content area with a thematic entity being carried out on the basis of the layout specific to this category. This enables the content areas to be associated with the thematic entities automatically, on the basis of general information relating to the type of document analyzed.

In an alternative embodiment, each thematic entity is associated with an external file reproducing at least a predetermined part of the content of the thematic entity, and the association of a content area with a thematic entity is carried out by comparison of the content areas with the external files. This enables the content areas and the thematic entities to be associated automatically on the basis of files which reproduce at least part of the text of the thematic entities.

In one embodiment, the method further comprises determining a reading order of the content areas on the basis of the metadata relating to the geometric coordinates and the thematic entities, and storing metadata identifying the reading order of the content areas. This enables the content areas to be displayed according to a reading path which is determined, notably, as a function of the structure of the article.

In one embodiment, the determination of a reading order of the content areas is carried out on the basis of the external files associated with the plurality of thematic entities forming the page of the document, and the method further comprises storing metadata identifying the reading order of the content areas.

In another aspect, the invention further relates to a method for displaying a page of an electronic document having a content comprising text distributed in the form of one or more paragraphs. The display method comprises creating an enrichment file associated with the page of the document according to the method described above, and displaying the content areas on a predetermined display unit, the display being adjusted on the basis of the metadata stored in the enrichment file. This enables the ease of use of the display to be improved for a user while taking the structure of the document into account. It also makes it possible to limit the computation required for the display step. For example, the enrichment file creation step can be carried out in a processing unit remote from the display unit on which the display step is carried out. Thus the computation requirements for the display unit are reduced.

In one embodiment, the display method further comprises dividing the text content areas into reading fragments of predetermined size adapted to the display parameters of the display unit, and displaying the content areas according to the determined reading order, the text content areas being displayed in groups of reading fragments as a function of a predetermined user zoom level. The division into reading fragments of a predetermined size (particularly as regards the height) enables a plurality of entities of the same reduced size to be processed, and improves the computation time. Furthermore, the fact that the reading fragments are generally of the same size enables groups of reading fragments to be displayed successively by regular movements of the document page relative to the viewport, thus improving the ease of reading for the user. The predetermined height is determined as a function of the display parameters of the display unit. This makes it possible to enhance the fluidity of movement from one group of reading fragments to another on a viewport of a given display unit. This is because the size of the fragments affects the extent of the movement required to pass from one group of fragments to another, and therefore affects the ease of reading.

In one embodiment, if the user zoom level is not suitable for the display of the whole of an image content area, the user zoom level is modified accordingly. This enables the importance of the data presented in the images to be taken into account.

In one embodiment, the display parameters of the display unit relevant to the division of the content areas comprise the size and/or the orientation of the viewport of the display unit.

In one embodiment, the change from the display of a first group of reading fragments to a second group of reading fragments is made by a movement of the document page relative to the viewport. This enables the display to be modified in order to display the group of fragments following the group of fragments displayed in the reading order, while maintaining satisfactory ease of reading for the user. This is because the sliding of the page relative to the viewport enables the user's eyes to follow the place on the page where he ceased reading.

In one embodiment, the display is initialized on a content area determined by a user. This allows the user, for example, to start the reading of the text at a given point, or to choose the thematic entity of the page which he wishes to read.

In one embodiment, the groups of reading fragments displayed include the maximum number of reading fragments associated with a single thematic entity which can be displayed with the predetermined user zoom level. This makes it possible to minimize the number of modifications to be made to the display in order to display the whole of a page.

In another aspect, the invention relates additionally to an enrichment file associated with a page of an electronic document having a content comprising text distributed in the form of one or more paragraphs, the file comprising metadata identifying the geometric coordinates of text content areas each comprising at least one paragraph.

In another aspect, the invention relates additionally to a storage file associated with a page of an electronic document having a content comprising text distributed in the form of one or more paragraphs and one or more images, the file comprising an enrichment file associated with the page of the electronic document as described above and the page of the electronic document.

In another aspect, the invention relates additionally to a system for creating an enrichment file associated with a page of an electronic document having a content comprising text distributed in the form of one or more paragraphs, the system comprising means of layout analysis for determining text content areas, each comprising at least one paragraph, and means of storage for storing metadata identifying the geometric coordinates of the text content areas.

In another aspect, the invention relates additionally to a computer program product adapted to implement the method for creating an enrichment file described above.

### BRIEF DESCRIPTION OF THE DRAWINGS

Other characteristics and advantages of the invention will become clear in the light of the following description, illustrated by the drawings, in which:
Figure 1 is a schematic illustration of a method for the computer implementation of the creation of an enrichment file associated with a page of an electronic document according to an embodiment of the invention.
Figure 2 shows the steps of a method for creating an enrichment file associated with a page of an electronic document according to an embodiment of the invention.
Figures 3A-3C show a page of an electronic document in different steps of the method for creating the enrichment file according to an embodiment of the invention.
Figures 4A-4C show steps for associating content areas with a thematic entity of the page according to an embodiment of the invention
Figure 5 is a schematic illustration of the steps of a method for creating an enrichment file according to another embodiment of the invention.
Figure 6 shows a step of determining a reading order of a text block according to an embodiment of the invention.
Figure 7 shows a step of dividing text content areas into reading fragments according to an embodiment of the invention.
Figures 8A-8B show steps of displaying content areas according to an embodiment of the invention.
Figures 9A-9B show a step of displaying content areas according to another embodiment of the invention.

### DETAILED DESCRIPTION

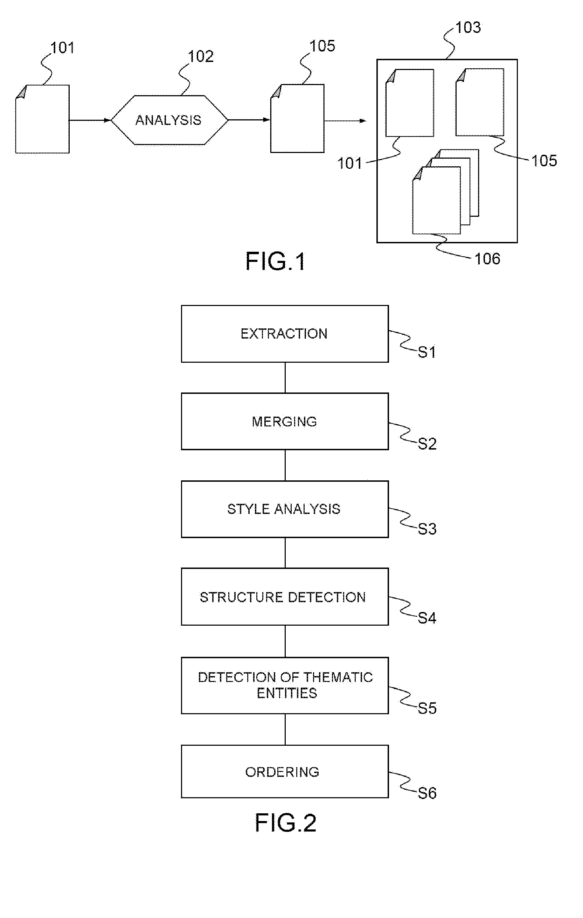

Figure 1 is a schematic illustration of an analysis system 102 which uses a method for creating an enrichment file 105 associated with a page of an electronic document 101 according to an embodiment of the invention. The input electronic document 101 is analyzed by the analysis system 102 to provide an enrichment file 105 at the output. A storage file 103 can be prepared subsequently. The storage file is also known as a "container", and can comprise the electronic document 101, the enrichment file 105, and source images 106 extracted from the electronic document 101.

The electronic document 101 can have one or more pages. The electronic document 101 has a content intended to be displayed by a user.

In the remainder of the description, the adjective "identified" applied to the information in the document or in the enrichment file signifies that the format of the electronic document or of the enrichment file gives direct access to said information. Alternatively, the use of the adjective "determined" applied to information signifies that the information is not directly accessible from the format of the electronic document and that an operation is performed to obtain said information. The term "content" used in relation to the electronic document denotes the visual information presented in the electronic document when the document is displayed, on a screen for example.

The content which is presented can comprise text in the form of a plurality of characters. The text can be distributed on the page over one or more lines of text. The lines of text can be distributed in the form of one or more paragraphs of text. The presented content can be laid out; in other words it can be represented by text areas, inscribed in rectangles, and images. For example, there may be text in the form of one or more columns, as presented in newspapers. The content presented on the page can comprise one or more images. The images may be rectangular in shape, or, more generally, may be delimited by a closed line (to form a polygon, a circle or a rectangle, for example). The text can be presented around images in such a way that the images are shaped.

The format of the electronic document 101 identifies the text lines. The format of the electronic document may also identify the characters contained in each text line, the position of each text line and a rectangle incorporating each text line. A text line can be identified, for example, by a series of alphabetical characters and by style information such as one or more style names and one or more areas of application of these styles relative to the series of characters. For example, in a text line identified as a series of 100 characters (c₁ to c₁₀₀), the style information can comprise a first style name applied to characters c₁ to c₅₀ and a second style name applied to characters c₅₁ to c₁₀₀. The style information may also comprise font size information. A style name can comprise a font type and one or more attributes chosen from among, at least, the italic, bold, strikethrough and underline attributes.

The format of the electronic document 101 also identifies the images and their position in the page. The format of the electronic document 101 can also provide access to source images 106 in the form of matrices of pixels. In some embodiments, the images presented on the page at the time of display are produced by processing the source images 106, for example by cropping or by conversion of the colors of the image into shades of grey. This processing may be carried out automatically by a rendering engine associated with the document format in such a way that the presented image does not use the full potential of the source image 106.
However, the electronic document 101 does not generally include the identification of any structure; this means that a text paragraph is not identified by a rectangle containing the paragraph. Instead, a text paragraph is generally composed of a series of rectangles, each incorporating lines. Moreover, the electronic document 101 does not generally distinguish between a title and the body of a text. The electronic document 101 does not generally comprise any information on the relations between the lines of text or between the images. The electronic document does not comprise any information about whether a text line or an image belongs to a group of text lines or to a group of images. Thus there is no way of knowing directly whether an image belongs to, or is related to, any specific text paragraph. The electronic document 101 is a fixed layout electronic document (including rich text, graphics, images), typically a document in portable document format (PDF®). The PDF® format is a preferred format for the description of such layouts, because it is a standard format for the representation and exchange of data.

The analysis system 102 comprises means for the computer processing of the electronic document 101. The analysis system 102 can also comprise means for transmitting the enrichment file and/or the container 103. In one embodiment, the system 102 is located at a remote server and transmits at least part of the container 103 through a telecommunications network to a user provided with a display unit. The analysis system 102 implements a process for creating an enrichment file 105 intended to identify a structure in the pages of the document in order to facilitate the display of the pages of the document on a display unit. In another embodiment, the analysis system 102 is located in a user terminal which also comprises the display unit.

The enrichment file 105 may associate each page of the electronic document 101 with metadata identifying the geometric coordinates of one or more content areas presented in the page.

The content areas are determined by the analysis system 102, using a layout analysis described below with reference to Figure 2. A content area can be defined as a continuous surface of the page on which content is presented. The geometric delimitation of the content areas depends on the implementation of the layout analysis. Content areas can typically be of two types, namely text context areas including information composed of characters, and image content areas including information in the form of illustrations. A text content area generally corresponds to one or more text paragraphs. A text paragraph can be defined as a group of one or more lines separated from the other text lines by a space larger than a predetermined space. The predetermined space can be equal to a line spacing present between the lines of the group of lines in the paragraph in question.

The analysis system 102 determines the type of content associated with the content areas on the basis of the information provided by the document description format. The enrichment file 105 may also associate each page of the electronic document 101 with metadata identifying the type of content areas presented in the page of the document.

In one embodiment, the analysis system can extract the source images 106 from the electronic document for use in the subsequent preparation of the container 103. The extraction of the source images 106 enables a better rendering to be obtained when the document is displayed. A knowledge of the format makes it possible to represent all the images included in the form of a table of pixels. It should be noted that this representation can be that of the raw image which was included in the document at the time of its creation. This image may be different from that which is actually displayed, for example because the inclusion process has changed its framing or reduced its size. In a format such as PDF, it is often possible to access source images in their original resolution, even if their representation in the pages of the document does not use the whole of the resolution. In other words, it is possible to access images having a better quality (notably, better definition) than that of their actual representation on the screen. For example, a high-definition source image identified in the electronic document in the form of a matrix of pixels can be manipulated by the rendering engine associated with the document format to present a lower-quality image at the time of display. In such a case, it may be possible to improve the rendering quality by using the source images 106. For example, if the zoom function is used on the presented image, it is possible to use the high-definition source image 106 to avoid pixelated presentation. The deconstruction of the document by the extraction of the source images 106 thus enables the constraints of the rendering engine to be overcome, so that the image can be displayed by means of a standard image engine.

The document page can be composed of a plurality of thematic entities. A thematic entity can be defined as a set of content areas which form a semantic unit independent of other content areas in the page. Typically, if the electronic document is a newspaper, a page may be composed of a plurality of articles where the thematic entities on the page correspond to the various articles presented on the page. The page may also contain an article and an advertisement, for example, with two thematic entities corresponding, respectively, to the article and to the advertisement. The analysis system 102 can determine the thematic entity to which each content area belongs, and the enrichment file 105 can also associate each page of the electronic document 101 with metadata identifying the thematic entities associated with the content areas of the document page. Identifying the thematic entities may allow excluding 'decorative' text from the reading path. It may also allow excluding certain areas of the page such as advertisements or banners from the reading order. Identifying the thematic entities may also allow building an automatic table of content for the document and makes it possible to store the textual and image content of each thematic entity in a content management system or database with some of the extracted metadata (titles) in order to retrieve it easily. Other applications involve recomposing new documents from the saved thematic entities.

The analysis system 102 can also determine a reading order of the content areas, and the enrichment file 105 can also associate each page of the electronic document 101 with metadata identifying the reading orders of the content areas. Additionally, if the document page comprises a plurality of thematic entities, the enrichment file 105 can associate metadata identifying the reading order of the content areas belonging to the same thematic entity. For a given thematic entity, the reading order can be defined as an order of the content areas whose reading enables the thematic entity to be interpreted. For example, the reading order of a page of a daily newspaper, comprising an article distributed over a plurality of columns identified as content areas, is, for example, the order of columns which enables the article to be reconstituted. The determination of the reading order may depend on regional parameters such as the direction of reading in the language of the article.

Figure 2 illustrates the processing steps used by the analysis system 102 of the electronic document 101 in order to create the enrichment file 105 in one embodiment of the invention. By way of example we will consider an electronic document in PDF® format, comprising one page and a plurality of thematic entities, each comprising text and one or more images.

In a first extraction step S1, using a library for the conversion of documents in portable document format (PDF®) into HTML format, the rectangles incorporating the text lines identified in the electronic document 101 are converted to blocks of the <div> type. The style information contained in the electronic document 101 is converted to a stylesheet style. This enables the list of styles used to be collected in the form of a catalogue so that statistics can be used, for example, in order to determine a predominant style on the page.

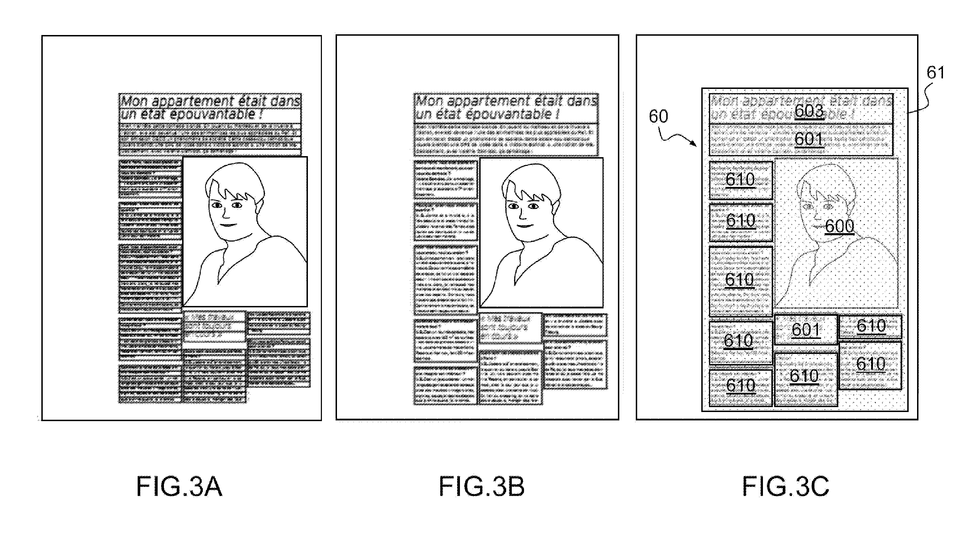

The images are also detected in this step by means of special tags, and the images are then reconstituted, using the specifications of the PDF® format. In this embodiment, the images which are determined correspond to image content areas. Figure 3A shows the operations carried out in step S1 on a page of an electronic document. The rectangles incorporating each of the text lines of the page can be seen in Figure 3A.

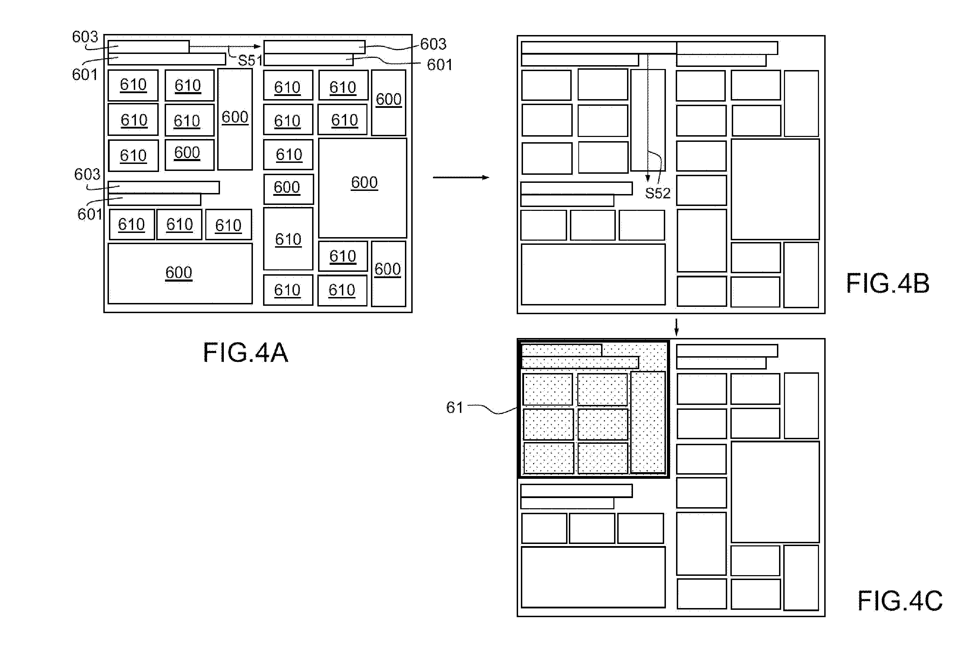

In a second merging step S2, the rectangles extracted in the preceding step are merged by means of an algorithm for the expansion of the rectangles incorporating the lines. The algorithm increments the size of each rectangle by one pixel in the vertical direction of the page until an overlap with another rectangle occurs. The incrementing can be carried out simultaneously on all the rectangles incorporating the lines. Since the line spacing is generally constant in a text paragraph, all the rectangles of a single paragraph generally overlap each other at the same value of the increment. The value X of the increment at which the overlap takes place is stored, and the rectangles which overlap each other are merged to form a rectangle which incorporates a paragraph, which will be referred to subsequently as a "text block". If the space between two paragraphs is substantially equal to the line spacing, the expansion algorithm cannot distinguish between the paragraphs, and the resulting text block may contain a plurality of paragraphs. The grouping of the lines into text blocks reduces the size of the enrichment file and decreases the amount of computation in the steps in which the enrichment file is used. The determination of text blocks also enables title blocks to be recognized subsequently, so that scene areas associated with the thematic entities of the page can be determined. The determination of scene areas on the basis of the title areas will be explained more fully with reference to Figures 4A-4C. Finally, the determination of text blocks makes it possible, for example, to specify the display of the whole of a text block on the screen. The text blocks to be displayed in full can be determined as a function of a predominant style. The whole of a text block can be displayed by adjusting a zoom level in a display step which is described more fully below.

The size of the text block resulting from the merging of rectangles incorporating text lines can be decremented subsequently by the stored increment value X. In this way the size of the text block can be reduced. The resulting text block incorporates one or more paragraphs and is of minimum size. In this embodiment, the text blocks represent the text content areas. The text content areas and the image content areas will be referred to subsequently as "content areas". Figure 3B shows the operations carried out in step S2 on a page of an electronic document. The text blocks incorporating text paragraphs are identified in Figure 3B.

In a third step S3 of style analysis, a predominant style among the text blocks can be determined. In this step, for each text block of a page, the number of characters in each style is determined in order to find a style distribution for each text block. The style distributions are then stored in a hash table associated with this page. The style which is most represented in the page is then identified. The most represented style in the page is referred to as the reference style, or body text style. Styles whose size is greater than the body text style are referred to as title styles.

In a fourth step of structure detection S4, the text blocks in which the most represented style has a size greater than the body text style are determined, on the basis of the previously determined distribution of the styles in the text blocks, as title blocks. The text blocks in which the most represented style has a size equal to the body text style are considered to be body text blocks. In another embodiment, the size of the text body style T0 and the weighted mean of the sizes of all the characters on the page E(T) are determined. A margin of error, err = ABS(T0-E(T)), can then be calculated. When this margin of error is known, a minimum and maximum size can then be calculated so that it can be taken into account for the determination of the text blocks, namely the text blocks in which the most represented style has a size t in the range between T0-err and T0+err. Blocks in which the most represented style has a style greater than T0+err are considered to be title blocks.

The text blocks which do not meet any of the preceding conditions are considered to be text blocks of an unknown type. The text blocks represent title content areas. Figure 3C shows a page of an electronic document downstream of step S4. Content areas 60 considered to be body text blocks 610, title blocks 603, images 600 or text blocks of an unknown type 601 can be seen in Figure 3C.

In a fifth step S5 for thematic entity detection, the content areas are associated with one of the thematic entities presented in the document page. For example, in the case where the page is extracted from a newspaper and has a plurality of articles, this step corresponds to the association of each paragraph with one of the articles of the page. One of the objectives of this step is the geometric determination of a scene area which groups together the text blocks and the images associated with a thematic entity. The blocks of an unknown type can be excluded for the step of detecting a thematic entity.

In one embodiment, the step of detection of a thematic entity is carried out on the basis of the determination of the category of the document from a list of categories of document comprising, for example, the magazine category, the newspaper category and the book category. The determination of the category of the document can be carried out manually by a user responsible for creating the enrichment file. Alternatively, the determination of the category of the document can be carried out automatically on the basis of an analysis of the density of text and images in the pages of the document. It is possible to construct a metric for determining the document category by choosing from the book, newspaper and magazine categories. The metric is a combination of statistics on the styles, the proportion of pages occupied by images, the color count, and the like.

If the document belongs to the magazine category, the scene area can be considered to be a rectangle incorporating all the determined content areas. The scene area 61 which incorporates all the content areas 60 of the magazine page can be seen in Figure 3C. In another embodiment, certain content areas can be excluded for the determination of the incorporating rectangle. For example, blocks of an unknown type can be excluded from the determination of the scene area. This can make it possible to avoid the inclusion of an advertisement in the structure of the article. In another embodiment in which it is considered that the magazine page can contain more than a single thematic entity, the determination of the scenes is carried out by applying an expansion algorithm to the content areas. This algorithm can be executed in two stages. In a first stage, a first expansion toward the right or the left (depending on the direction of reading, which may be European or Japanese, for example) is applied to the titles only, and the expansion stops if the edge of the page is reached or if a block is contacted. In a second stage, a second purely vertical expansion is applied to all the blocks on the page. This is an expansion by N pixels, where N is determined empirically. The expansion of the blocks creates overlaps of blocks. The scene area is then constructed with all the blocks which have at least one overlap with another block.

If the document belongs to the newspaper category, the thematic entity detection can be carried out on the basis of the layout specific to this category. Figures 4A-4D show a newspaper page model during the thematic entity detection step. In a first step S51 shown in Figure 4A, a given title area can be expanded toward the right until it overlaps with another title area, or until it reaches the edge of the page. In a second step S52 shown in Figure 4B, the title area can be expanded toward the foot of the page until it overlaps with another title area or until it reaches the edge of the page. In a third step, shown in Figure 4C, the rectangle corresponding to the title area expanded in steps S51 and S52 is defined as the scene area of the thematic entity associated with the title area. The directions of expansion of the title area in steps S51 and S52 can be modified, for example as a function of the language in which the newspaper is written. The thematic entity detection can thus be based on the arrangement of title areas on the page.

In another embodiment, in which the document page is accompanied by one or more files which are associated with the thematic entities of the page and which comprise the text of said thematic entities, the thematic entity detection step is carried out by using said files. The files which are associated with the thematic entities of the page and which comprise the text of said thematic entities will be referred to subsequently as external files. Each external file associated with a thematic entity comprises the text of the thematic entity in question. This text can be provided in the form of raw text or in a structured form (in the form of an XML file, for example). A margin of error between the text contained in the external file and the thematic entity may be tolerated. For example, the margin of error between the text presented in the page of the electronic document and the text contained in the external files can be 10%. For example, the external files can originate from a text format version of the electronic document 101.

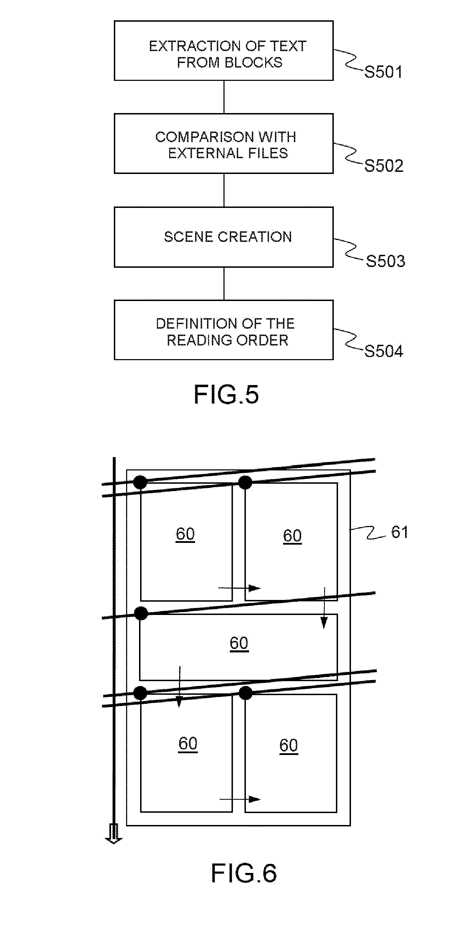

Figure 5 shows the thematic entity detection step and the order step for the case where the document page is accompanied by external files. In a first text extraction step S501, the text blocks are analyzed successively to extract the text contained in each text block. In a second comparison step S502, for each text block, the external file which contains the text extracted from the text area in question is identified. A text block is thus associated with the thematic entity corresponding to the external file which contains the same text as the block in question. A margin of error of 10% between the text contained in the block and the text contained in the external file may be tolerated. The identification of the external file may be based on a text comparison algorithm. In a third step S503 of scene creation, a scene area which incorporates all the text blocks associated with a single thematic entity is defined. Additionally, in a fourth step S504, a reading order of the text blocks of a given thematic entity can be determined on the basis of the external file associated with the thematic entity. This is because the position of the text contained in a given text block can be determined relative to the full text contained in the associated external file. For each text block associated with the external file, IN and OUT markers, corresponding to the start and end of the text in the block relative to the external file, can be determined. The external file is generally defined as an indexed character order and the IN and OUT markers are integers which represent, respectively, the indices of the first and last characters of the text block in question in the external file. If the set of text blocks associated with an external file has been processed, the text blocks can be sorted by increasing order of value of the IN markers, to obtain a reading order of the text blocks and consequently an ordered list of the text blocks.

With further reference to Figure 2, a reading order of the content areas is determined in a sixth ordering step S6. This step consists in ordering the content areas within a scene area for a given thematic entity. In one embodiment, the determination of the reading order is based on the geometric coordinates of the content areas associated with a single thematic entity.

For example, an affine lines algorithm can be used according to a method of determination shown in Figure 6. An algorithm of this type comprises a step in which the scene area 61 is scanned with a straight line inclined with respect to the horizontal of the text lines on the page. The angle of inclination can be chosen in such a way that the inclination of the straight line corresponds to a gentle slope. The chosen angle between the straight line and the horizontal can be positive (toward the top of the page) or negative (toward the foot of the page) as a function of regional parameters such as the direction of reading in the language of the article. In the case of a language which is read from left to right, the chosen angle is positive. The first intersection between the straight line and an upper corner of the blocks is then detected. In the case of a language read from left to right, the intersection with an upper left corner of the blocks is detected, and the blocks are ordered as a function of this event. In one embodiment, the intersections with text body blocks 610 are detected.

In an embodiment in which the document page is accompanied by one or more external files each associated with a thematic entity, the reading order of the text blocks can be determined as described above with reference to step S504 in Figure 5. In this embodiment, the insertion of the images in the text block reading order can be achieved by using an affine lines algorithm. When the text blocks have been ordered, it is simply necessary to use the affine lines algorithm to mark the position at which the image block would have been positioned and to insert the image block at this position in the ordered list of text blocks obtained by the method described with reference to step S504.

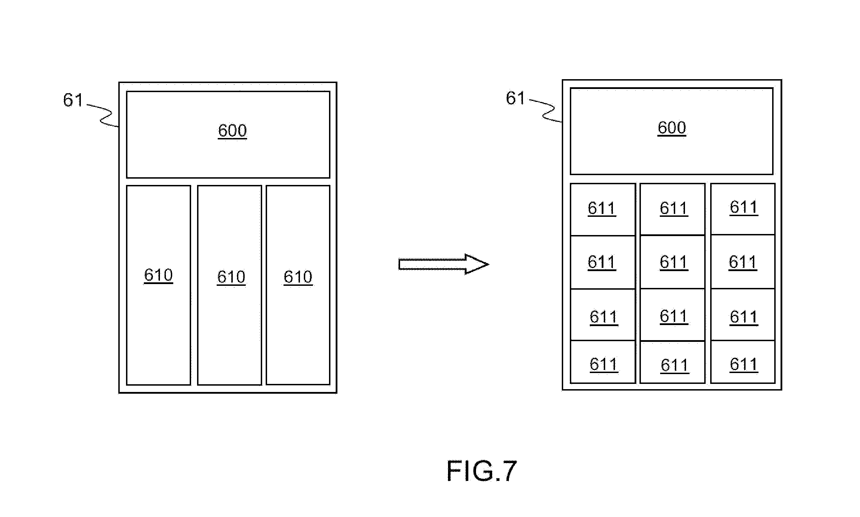

Figure 7 shows a step preliminary to the display of a page of an electronic document according to one embodiment of the invention. The display can be produced on a display unit by using the information contained in the enrichment file associated with the document page.

The enrichment file can be used to identify on the page a scene area 61, associated with a thematic entity, text content areas 610 and an image content area 600. These areas have been determined by the processing steps described above, applied to the page of the electronic document. The preliminary step consists in dividing the text content areas into areas which do not exceed a certain value of height, HMAX. It is also possible to define a second height HMAX2, greater than HMAX, which provides a maximum tolerance for the height of the last divided block corresponding to a text area at the foot of the page. The value HMAX is a parameter of the algorithm and depends on the peripheral unit used for reading. For example, in the case of a table having a screen size of 1024x768 pixels, the values HMAX and HMAX2 can be 200 and 250 pixels respectively. The values HMAX and HMAX2 are not dependent on the zoom factor used for reading. The fact that the reading fragments are of the same size means that the movements during modifications of the display will be regular and equal to a multiple of HMAX. The fact that the sizes are not dependent on the zoom level is important, since it enables the computation to be carried out in advance and makes it unnecessary to repeat the computation when the user modifies the zoom level. The zoom factor used for the computation is the factor which gives a representation of the document at a scale of 1:1 on the tablet. This is equivalent to computing an image of each page which is such that the display of this image at a factor of 1 (1 pixel of the image is represented by 1 pixel on the screen) has the same physical size as the original document. This image is used for the application of the rule for division of the blocks according to HMAX and HMAX2.

A list of the reading fragments for a thematic entity, ordered in the reading order of the content areas defined previously, can be produced.

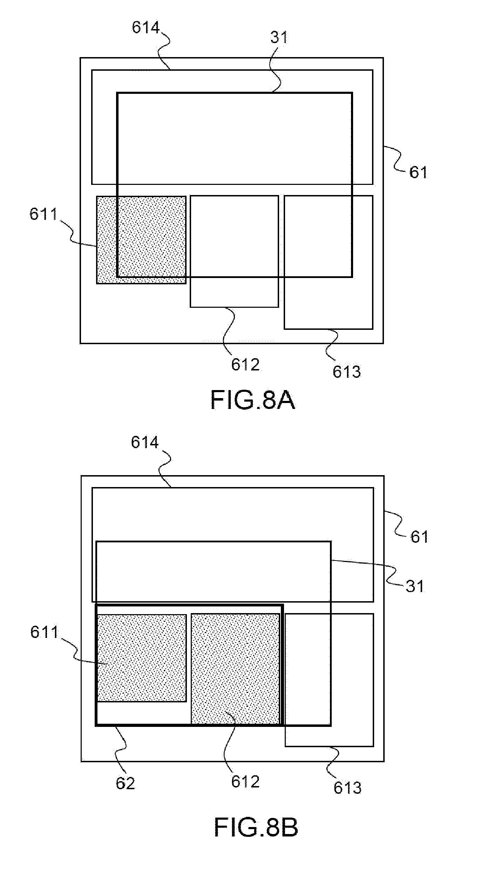

Figures 8A-8B show steps of the display in one embodiment of a display method according to the invention. The enrichment file associated with a page which is displayed can be used to identify on the page a scene area 61, successive reading fragments 611, 612, 613 from a list of fragments associated with the scene area 61, and an image content area 614. These areas have been determined by the processing steps described above, applied to the page of the electronic document. For a predetermined user zoom level, the viewport is represented relative to the scene area 61 by the window 31. The user zoom level can be defined as a zoom level chosen by the user, which is taken into consideration for the production of the display. If necessary, however, the actual zoom level at the time of display may be different from the user zoom level. In Figure 8A, the fragment 611 represents a target area. The target area is an area which is to be displayed as a priority. The target area may be a reading fragment or an image content area. In Figure 8A, the target area is the fragment 611. The target area may be determined as a result of a user input, for example a click on a reading fragment or an image content area. The target area may also be determined as the first fragment of the list of fragments when a guided reading software program is launched as a result of pressing a reading start button. In use, the target area may also be determined as the fragment from the list of fragments which follows the fragment or fragments displayed on the screen when a NEXT button for advancing the reading is actuated. The target fragment may also be determined as the fragment from the list preceding the fragment or fragments displayed on the screen if a PREVIOUS button for moving backwards in the reading is actuated. As a general rule, the target area is displayed as a whole even if the zoom level required for its display is lower than the user zoom level. In this case, the user zoom level is adjusted to enable the whole of the target area to be displayed. Additionally, the reading fragments are displayed in such a way that the greatest possible number of reading fragments beyond the target area is displayed with the predetermined user zoom level. With reference to Figure 8B, the size of the viewport 31 relative to the scene area 61 with allowance for the predetermined user zoom level is clearly sufficient to contain the group of fragments 62 formed by the fragments 611 and 612. The group 62 is therefore displayed after it has been established that the size of the window 31 is insufficient to additionally contain the fragment 613 following the fragment 612 in the list of fragments.

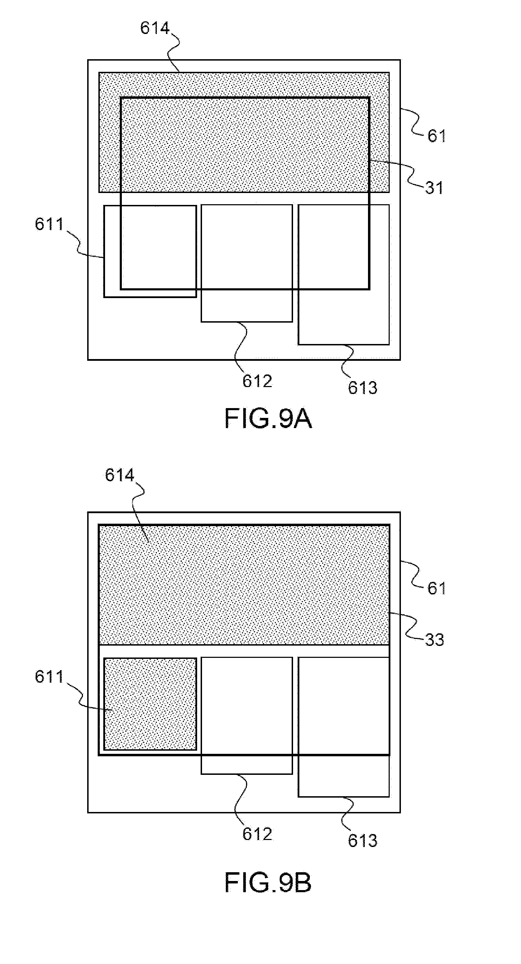

Figures 9A and 9B show content area display steps in a case where an image content area is displayed according to an embodiment of the invention. As a general rule, an image content area is displayed as a whole even if the zoom level required for its display is lower than the user zoom level. In this case, the user zoom level is adjusted to enable the whole of the image content area to be displayed. In Figure 9A, the window 31 represents the size of the viewport relative to the scene area 61 for a predetermined user zoom level. As the window 31 cannot contain the image content area 614, the user zoom level is adjusted automatically in such a way that the image content area 614 can be displayed as a whole. The window 33 represents the size of the viewport relative to the page for the adjusted user zoom level. Additionally, the reading fragment or fragments whose size is such that they can be contained in the window 33 are displayed in addition to the image content area 614. In Figure 9B, therefore, the viewport displays the image content area 614 and the reading fragment 611 as a whole.

Although it has been described in the form of a certain number of exemplary embodiments, the device and the method according to the invention incorporate different variants, modifications and improvements which will be evident to a person skilled in the art, these different variants, modifications and improvements being considered to lie within the scope of the invention as defined by the following claims.

## Claims

1. A method for creating an enrichment file associated with a page of an electronic document formed by a plurality of thematic entities and having a content comprising text distributed in the form of one or more paragraphs, the method comprising:
- determining areas of text content, each comprising at least one paragraph, by layout analysis,
- associating each content area with one of the thematic entities, and
- storing metadata identifying the geometric coordinates of the text content areas of the page and the thematic entities associated with said content areas of the page.

2. The method as claimed in claim 1, wherein the presented content further comprises one or more images, and the method further comprises:
- determining image content areas, each comprising at least one image,
- storing metadata identifying the geometric coordinates of the image content areas of the page.

3. The method as claimed in either of claims 1 and 2, wherein the text presented on the page is identified in the electronic document in the form of lines of text, and the layout analysis comprises:
- extracting rectangles, each rectangle incorporating one line of text, and
- merging said rectangles by means of an expansion algorithm in order to obtain the text content areas.

4. The method as claimed in claim 3, wherein the text comprises series of characters and is further identified in the document by style data relative to said series of characters, and the layout analysis comprises determining a style distribution for each text content area.

5. The method as claimed in claim 4, wherein the layout analysis further comprises identifying title content areas among the text content areas on the basis of the style distribution of the text content areas.

6. The method as claimed in any of the preceding claims, wherein the document belongs to a category of a given list of categories, and the method further comprises identifying the category of the document, the association of a content area with a thematic entity being carried out on the basis of the layout specific to this category.

7. The method as claimed in any of claims 1 to 5, wherein each thematic entity is associated with an external file reproducing at least a predetermined part of the content of the thematic entity, and the association of a content area with a thematic entity is carried out by comparison of the content areas with the external files.

8. The method as claimed in any of the preceding claims, further comprising:
- determining a reading order of the content areas on the basis of the metadata relating to the geometric coordinates and to the thematic entities, and
- storing metadata identifying the reading order of the content areas.

9. The method as claimed in claim 7, additionally comprising:
- determining a reading order of the content areas on the basis of the external files associated with the plurality of thematic entities forming the page of the document, and
- storing metadata identifying the reading order of the content areas.

10. A method for displaying a page of an electronic document formed by a plurality of thematic entities and having a content comprising text distributed in the form of one or more paragraphs, the method comprising:
- creating an enrichment file associated with the page of the document as claimed in any of claims 1 to 9,
- displaying the content areas on a predetermined display unit, the display being adjusted on the basis of the metadata stored in the enrichment file.

11. The display method as claimed in claim 10, to the extent that it depends on any of claims 8 to 9, further comprising:
- dividing the text content areas into reading fragments of predetermined size adapted to the display parameters of the display unit,
and in which
- the display of the content areas is carried out according to the determined reading order, the text content areas being displayed in groups of reading fragments as a function of a predetermined user zoom level.

12. The method as claimed in claim 11 to the extent that it depends on claim 2, further comprising automatically adjusting the zoom level to enable the whole of the image content area to be displayed.

13. The method as claimed in either of claims 11 and 12, wherein the groups of reading fragments displayed include the maximum number of reading fragments associated with a single thematic entity which can be displayed with the predetermined user zoom level.

14. A system for creating an enrichment file associated with a page of an electronic document formed by a plurality of thematic entities and having a content comprising text distributed in the form of one or more paragraphs, the system comprising:
- means of analyzing the layout, for determining the text content areas comprising at least one paragraph and for associating each content area with one of the thematic entities;
- storage means, for storing metadata identifying the geometric coordinates of the text content areas and the thematic entities associated with said content areas of the page.

15. A readable medium comprising computer program instructions executable by a processor, the computer program instructions comprising instructions for executing the steps of the method for creating an enrichment file as claimed in at least one of claims 1 to 9.
